# EUROPÄISCHE PATENTSCHRIFT

(11) **EP 1 604 494 B1**
(45) Veröffentlichungstag und Bekanntmachung des Hinweises auf die Patenterteilung: **17.10.2007**
(21) Anmeldenummer: 04709207.7
(22) Anmeldetag: 09.02.2004
(51) Int. Cl.: H04L 12/56

(54) **VERFAHREN UND SENDER ZUR ÜBERTRAGUNG VON DATENPAKETEN**
METHOD AND TRANSMITTER FOR TRANSMITTING DATA PACKETS
PROCEDE ET EMETTEUR POUR LA TRANSMISSION DE PAQUETS DE DONNEES

(30) Priorität: 20.03.2003 EP 03006392
(43) Veröffentlichungstag der Anmeldung: 14.12.2005
(73) Patentinhaber: NOKIA SIEMENS NETWORKS GMBH & CO. KG, 81541 München (DE)
(72) Erfinder: MOONEN, Benny, 3582 Koersel (BE)
(86) Internationale Anmeldenummer: PCT/EP2004/001176
(87) Internationale Veröffentlichungsnummer: WO 2004/084498

(56) Entgegenhaltungen:
- WO-A-01/37507
- STEVENS W R: "TCP/IP Illustrated, Volume 1 The Protocols,TCP TIMEOUT AND RETRANSMISSION" TCP/IP ILLUSTRATED. VOL. 1: THE PROTOCOLS, PROFESSIONAL COMPUTING SERIES, READING, MA: ADDISON WESLEY, US, Bd. 1, 1994, Seiten 297-337, XP002223116 ISBN: 0-201-63346-9

## Beschreibung

Die Erfindung betrifft ein Verfahren zur Übertragung einer Reihe von Nutzdatenpaketen von einem Sender gegebenenfalls über eine oder mehrere die Nutzdatenpakete weiterleitende Einrichtungen zu einem Empfänger unter Verwendung eines TCP-Protokolls nach dem Oberbegriff des Anspruchs 1.

Weiterhin betrifft die Erfindung eine Vorrichtung zur Übertragung einer Reihe von Nutzdatenpaketen an einen Empfänger gegebenenfalls über eine oder mehrere die Nutzdatenpakete weiterleitende Einrichtungen nach dem Oberbegriff des Anspruchs 8.

In Funkkommunikationssystemen werden Informationen (beispielsweise Sprache, Bildinformation, Videoinformation, SMS (Short Message Service) oder andere Nutzdaten) mit Hilfe von elektromagnetischen Wellen über eine Funkschnittstelle zwischen sendender Funkstation und Empfänger übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, sowie weitere netzseitige Einrichtungen.

In vielen Funkkommunikationssystemen, wie z.B. in Systemen nach dem Standard GPRS (General Packet Radio Service), wie auch in vielen leitungsgebundenen Netzen, werden Nutzdaten blockweise von einem Sender zu einem Empfänger in Form von Nutzdatenpaketen übertragen. Oftmals findet hierbei das TCP-Protokoll (Transmission Control Protocol) Einsatz, welches üblicherweise auch für Datenübertragungen im Zusammenhang mit dem Internet verwendet wird. Zu Beginn einer Nutzdatenübertragung unter Verwendung des TCP-Protokolls wird hierbei der sogenannte "Slow-Start-Algorithmus" zur Vermeidung der Überlastung des jeweiligen Netzes eingesetzt. Hierzu sendet der Sender zuerst eines oder einige wenige Nutzdatenpakete. Nachdem der Sender eine Empfangsbestätigung für dieses oder diese Nutzdatenpakete empfangen hat, sendet er eine größere Anzahl an Nutzdatenpaketen. Hierdurch wird die zwischen Sender und Empfänger übertragene Datenrate mit der Zeit gesteigert. Eine Beschreibung des Slow-Start-Algorithmus findet sich z.B. in W. Richard Stevens: TCP/IP Illustrated, Volume 1, The Protocols, Addison Wesley Longman, Inc., 1994, pp. 285-287.

Das Dokument WO 01/37507 A2 beschreibt eine Datenübertragung zwischen einem Sender und einem Empfänger unter Verwendung von WAP (Wireless Application Protocol). Der Sender versendet Pakete gruppenweise. Es ist möglich, dass die Pakete "not stopp and wait" gesendet werden. Dies bedeutet, dass Pakete einer Gruppe gesendet werden dürfen, bevor eine Bestätigung für Pakete einer vorherigen Gruppe von dem Sender empfangen wurde.

Der Erfindung liegt die Aufgabe zugrunde, ein Verfahren der eingangs genannten Art aufzuzeigen, welches eine effektive Übertragung von Nutzdatenpaketen zwischen einem Sender und einem Empfänger in der Anfangsphase der Übertragung von Nutzdaten zwischen dem Sender und dem Empfänger ermöglicht. Weiterhin soll hierfür eine geeignete Vorrichtung zur Übertragung von Nutzdatenpaketen der eingangs genannten Art aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

Zur Übertragung einer Reihe von Nutzdatenpaketen von einem Sender gegebenenfalls über eine oder mehrere die Nutzdatenpakete weiterleitende Einrichtungen zu einem Empfänger wird ein TCP-Protokoll verwendet. Zu Beginn der Nutzdatenübertragung sendet der Sender eine erste Anzahl an Nutzdatenpaketen der Reihe von Nutzdatenpaketen an den Empfänger. Besteht diese erste Anzahl an Nutzdatenpaketen aus einer Mehrzahl von Nutzdatenpaketen, so werden diese in direkter Abfolge nacheinander gesendet. Während einer Zeitspanne nach der Versendung der ersten Anzahl an Nutzdatenpaketen sendet der Sender keine Nutzdatenpakete an den Empfänger. Zu einem späteren Zeitpunkt sendet der Sender eine zweite Anzahl an Nutzdatenpaketen der Reihe von Nutzdatenpaketen an den Empfänger. Der Sender empfängt von dem Empfänger eine Empfangsbestätigung, welche der Empfänger nach dem Empfang der ersten Anzahl an Nutzdatenpaketen sendet.

Erfindungsgemäß wird der spätere Zeitpunkt so bestimmt, dass er vor dem Zeitpunkt des Empfangs der Empfangsbestätigung durch den Sender der Nutzdatenpakete liegt.

Bei dem in der Erfindung zur Übertragung von Datenpaketen verwendeten TCP-Protokoll handelt es sich um ein zuverlässiges Protokoll, welches zur Bereitstellung eines sicheren Transports von Daten durch diverse Netzwerke eingesetzt werden kann. Insbesondere findet das TCP-Protokoll Einsatz in Verbindung mit dem IP-Protokoll (Internet Protocol). Im OSI-Schichtmodell ist das TCP-Protokoll auf der vierten Schicht, d.h. der Transportschicht, angeordnet, während es innerhalb des TCP/IP-Schichtmodells auf der dritten Schicht, d.h. der Transportschicht oder Host-To-Host-Schicht, angeordnet ist.

Bei dem Verfahren liegen dem Sender Nutzdaten vor, welche in Form einer Mehrzahl an Nutzdatenpaketen an den Empfänger übertragen werden sollen. Diese Übertragung kann entweder auf direkte Art , d.h. ohne Zwischenschaltung weiterer Einrichtungen, zwischen dem Sender und dem Empfänger zum Beispiel über feste Leitungen oder über Funk erfolgen, die Nutzdatenpakete können aber auch von einer oder mehreren Einrichtungen zwischen dem Sender und dem Empfänger weitergeleitet werden. Die Nutzdatenübertragung startet damit, dass der Sender eine erste Anzahl an Nutzdatenpaketen an den Empfänger sendet. Die Nutzdatenpakete der ersten Anzahl an Nutzdatenpaketen werden hierbei möglichst direkt hintereinander gesendet. Die Zeit, welche zwischen der Versendung der einzelnen Nutzdatenpakete der ersten Anzahl an Nutzdatenpaketen verstreicht, hängt von den Kapazitäten des Senders ab. Eine Verzögerung kann hierbei zum Beispiel dadurch entstehen, dass die Pakete in dem Sender in den verschiedenen logischen Schichten des Senders erzeugt bzw. verarbeitet werden müssen.

Nach der Versendung der ersten Anzahl an Nutzdatenpaketen werden von dem Sender während einer Zeitspanne keine Nutzdatenpakete an den Empfänger gesendet. Während dieser Zeitspanne wartet der Empfänger in Bezug auf die Nutzdatenübertragung an den Empfänger. Diese Zeitspanne des Wartens übersteigt in jedem Fall diejenige Zeitspanne, welche gegebenenfalls zwischen der Versendung der einzelnen Nutzdatenpakete der ersten Anzahl an Nutzdatenpaketen verstreicht. Zu einem späteren Zeitpunkt sendet der Sender eine zweite Anzahl an Nutzdatenpaketen an den Empfänger. Hierbei kann es sich wie auch bei der ersten Anzahl an Nutzdatenpaketen um ein einzelnes Nutzdatenpaket oder auch um eine Mehrzahl an Nutzdatenpaketen handeln. Der spätere Zeitpunkt bezieht sich auf die Versendung des zuerst gesendeten Nutzdatenpaketes der zweiten Anzahl an Nutzdatenpaketen.

Von dem Empfänger empfängt der Sender eine Empfangsbestätigung, welche der Empfänger sendet, nachdem er die erste Anzahl an Nutzdatenpaketen empfangen hat. Dieser Empfangsbestätigung kann der Sender somit entnehmen, dass ein Empfang der ersten Anzahl an Nutzdatenpaketen durch den Empfänger stattgefunden hat, ein Verlust eines Teils der ersten Anzahl an Nutzdatenpaketen oder auch aller Nutzdatenpakete der ersten Anzahl an Nutzdatenpaketen in diesem Fall also nicht aufgetreten ist. Der Sender beginnt mit der Versendung der zweiten Anzahl an Nutzdatenpaketen, bevor er die Empfangsbestätigung des Empfängers für die erste Anzahl an Nutzdatenpaketen empfangen hat. Die Zeitspanne, während welcher Sender keine Nutzdatenpakete an den Empfänger sendet, ist somit durch diese Bedingung nach oben hin begrenzt.

In einer Weiterbildung der Erfindung wird der spätere Zeitpunkt so bestimmt, dass der Empfänger die zweite Anzahl an Nutzdatenpaketen nach der Versendung der Empfangsbestätigung empfängt. Dies hat den Vorteil, dass übliche Verfahren, wie z.B. der bekannte Slow-Start-Algorithmus, in denen der Empfänger eine zweite Anzahl an Nutzdatenpaketen erst nach der Versendung der Empfangsbestätigung für die erste Anzahl an Nutzdatenpaketen empfängt, nur in begrenztem Umfang modifiziert werden müssen, um dass erfindungsgemäße verfahren implementieren zu können. Auf Seiten des Empfängers ist bei dieser Weiterbildung der Erfindung gegenüber den genannten üblichen Verfahren somit keine Änderung nötig. Eine Änderung hingegen wäre dann für den Empfänger nötig, wenn der spätere Zeitpunkt so bestimmt würde, dass der Empfänger die zweite Anzahl an Nutzdatenpakten vor der Versendung der Empfangsbestätigung empfängt, was einer anderen Ausführungsform des erfindungsgemäßen Verfahrens entspricht.

Mit Vorteil hängt die Zeitspanne von der Zeitdifferenz zwischen der Versendung eines Datenpaketes durch den Sender und dem Empfang dieses Datenpaketes durch den Empfänger ab. Die Zeitdifferenz zwischen der Versendung eines Datenpaketes durch den Sender und dem Empfang dieses Datenpaketes durch den Empfänger entspricht in der Regel der Zeitdifferenz zwischen der Versendung eines Datenpaketes durch den Empfänger und dem Empfang dieses Datenpaketes durch den Sender, so dass die Abhängigkeit auch umgekehrt formuliert werden kann. Die Abhängigkeit der Zeitspanne wirkt sich gemäß den obigen Ausführungen auf direkte Weise auf die Bestimmung des späteren Zeitpunktes, zu dem die zweite Anzahl an Nutzdatenpaketen versendet wird, aus, da der spätere Zeitpunkt den Endpunkt der Zeitspanne darstellt. Insbesondere kann eine solche Zeitdifferenz vor der Übertragung der Nutzdatenpakete, z.B. im Rahmen einer Routine zum Verbindungsaufbau, ermittelt werden. Hierzu kann zur Ermittlung der Umlaufzeit diejenige Zeit gemessen werden, welche nach der Versendung eines Datenpaketes durch den Sender bis zum Empfang eines als Antwort auf dieses Datenpaket fungierenden Datenpaketes in dem Sender vergeht. Die Zeitdifferenz zwischen der Versendung eines Datenpaketes durch den Sender und dem Empfang dieses Datenpaketes durch den Empfänger beträgt in etwa die Hälfte dieser Umlaufzeit. Die Zeitspanne, während welcher der Sender keine Nutzdatenpakete an den Empfänger sendet, kann zum Beispiel der ermittelten halben Umlaufzeit entsprechen, oder auch einem Bruchteil oder einem Vielfachen dieser halben Umlaufzeit.

In einer Ausgestaltung der Erfindung werden die Nutzdatenpakete von dem Sender zu dem Empfänger zumindest teilweise über Funk übertragen. Hierzu kann zum Beispiel der Funkkommunikationsstandard GPRS oder UMTS verwendet werden. Die Nutzdatenpakete können hierbei direkt per Funk von dem Sender zu dem Empfänger übertragen werden, es ist jedoch auch möglich, dass die Nutzdatenpakete von dem Sender über eine feste Leitung an eine Einrichtung übertragen werden, welche die Nutzdatenpakete per Funk an den Empfänger sendet. Auch eine Zwischenschaltung weiterer Einrichtungen zur Weiterleitung der Nutzdatenpakete kann realisiert werden.

Bei den Nutzdatenpaketen handelt sich es vorzugsweise um Daten aus dem Internet.

In einer Weiterbildung der Erfindung ist der Empfänger Bestandteil eines Mobilfunkkommunikationssystems. Zusätzlich stellt der Sender eine sowohl mit dem Mobilfunkkommunikationssystem als auch mit einem anderen, ein TCP-Protokoll verwendenden Netz verbundene Einrichtung dar. Ein Beispiel für einen derartigen Empfänger ist eine Mobilstation eines GPRS-Funkkommunikationssystems, ein Beispiel für einen erfindungsgemäßen Sender stellt ein TCP-Proxy-Server dar, welcher als Verbindung zwischen dem GPRS-Funkkommunikationssystem und dem Internet fungiert.

Es ist möglich, dass die zweite Anzahl an Nutzdatenpaketen die erste Anzahl an Nutzdatenpaketen übersteigt. Dies ist besondere dann von Vorteil, wenn das erfindungsgemäße Verfahren als überarbeiteter Slow-Start-Algorithmus eingesetzt wird.

Die oben genannte Aufgabe wird hinsichtlich der Vorrichtung durch eine Vorrichtung mit den Merkmalen des Anspruchs 8 gelöst.

Vorteilhafte Ausgestaltungen und Weiterbildungen der Vorrichtung sind Gegenstand von Unteransprüchen.

Die Vorrichtung zur Übertragung einer Reihe von Nutzdatenpaketen an einen Empfänger gegebenenfalls über eine oder mehrere die Nutzdatenpakete weiterleitende Einrichtungen weist Mittel zur Verwendung eines TCP-Protokolls zur Versendung von Nutzdatenpaketen auf, sowie Mittel zum Versenden einer ersten Anzahl an Nutzdatenpaketen der Reihe von Nutzdatenpaketen an den Empfänger, bei Versendung einer Mehrzahl von Nutzdatenpaketen als erste Anzahl an Nutzdatenpaketen in direkter Abfolge nacheinander, weiterhin Mittel zum Versenden einer zweiten Anzahl an Nutzdatenpaketen der Reihe von Nutzdatenpaketen an den Empfänger zu einem späteren Zeitpunkt nach einer Zeitspanne nach Versendung der ersten Anzahl an Nutzdatenpaketen.

Erfindungsgemäß weist die Vorrichtung Mittel zum Bestimmen des späteren Zeitpunktes auf, so dass der spätere Zeitpunkt vor dem Zeitpunkt des Empfangs einer von dem Empfänger auf den Empfang der ersten Anzahl an Nutzdatenpaketen hin gesendeten Empfangsbestätigung in der Vorrichtung liegt.

Die erfindungsgemäße Vorrichtung ist insbesondere zur Durchführung des erfindungsgemäßen Verfahrens geeignet. Hierzu kann sie weitere Mittel aufweisen.

In einer Ausgestaltung der Erfindung weist die Vorrichtung Mittel zum Bestimmen des späteren Zeitpunktes auf, so dass die Zeitspanne von der Zeitdifferenz zwischen der Versendung eines Datenpaketes durch die Vorrichtung und dem Empfang dieses Datenpaketes durch den Empfänger abhängt.

In Weiterbildung der Erfindung ist die Vorrichtung derart mit einem Mobilfunkkommunikationssystem verbunden, dass die Nutzdatenpakete über das Mobilfunkkommunikationssystem an den Empfänger übertragbar sind.

Im folgenden wird die Erfindung anhand eines Ausführungsbeispiels näher erläutert. Dabei zeigen
- Figur 1:: ein GPRS-Funkkommunikationssystem in Verbindung mit dem Internet,
- Figur 2:: ein Ablaufdiagramm gemäß dem Stand der Technik,
- Figur 3:: ein erfindungsgemäßes Ablaufdiagramm,
- Figur 4:: einen erfindungsgemäßen Sender.

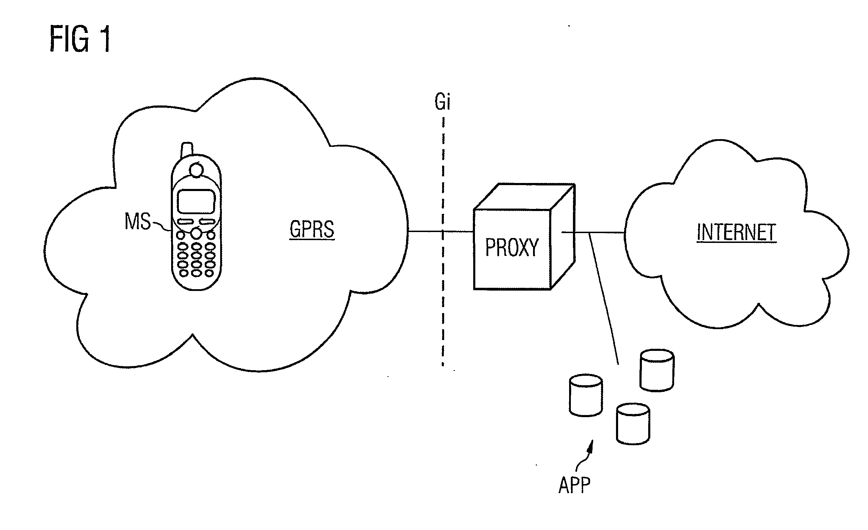

Figur 1 zeigt ein Mobilfunkkommunikationssystem GPRS nach dem Standard GPRS, innerhalb welchem Nutzdaten paketweise übertragen werden können. Die Erfindung kann jedoch auch auf andere Mobilfunksysteme, wie z.B. Systeme nach dem Standard UMTS angewandt werden. Bestandteil des Mobilfunkkommunikationssystems GPRS ist eine Mobilstation MS. Ein Mobilfunkteilnehmer will über die Mobilstation MS Daten aus dem Internet INTERNET herunterladen. Hierzu ist das Mobilfunkkommunikationssystem GPRS über einen Proxy-Server PROXY mit dem Internet INTERNET verbunden. Verschiedene Anwendungen (Applications) APP, wie zu Beispiel E-Mail, Informationsdienste, Spiele, diverse Downloads, sowie Video- und Audiodienste sind verfügbar. Der Proxy-Server PROXY befindet sich an der Gi-Schnittstelle Gi des Mobilfunkkommunikationssystems GPRS. Diese Schnittstelle stellt den Bezugspunkt zwischen der Gateway GPRS Support-Einheit (GGSN) und dem externen IP-Netz in Form des Internets INTERNET dar. Wird innerhalb des Funkkommunikationssystems GPRS eine Anfrage nach Daten aus dem Internet gestellt, so richtet sich diese Anfrage nicht direkt an einen Server im Internet INTERNET, sondern an den Proxy-Server PROXY. Dieser ruft die angeforderte Web-Seite bei einem Web-Server im Internet INTERNET ab, lädt diese Seite, speichert sie auf einer Festplatte und gibt die angeforderten Daten dann an die Teilnehmerstation im Funkkommunikationssystem GPRS weiter, von welcher die Anfrage kam. Die Speicherung der Daten durch den Proxy-Server PROXY kann hierbei jedoch auch unterbleiben, so z.B. aufgrund einer Anweisung von dem Web-Server oder per Konfiguration.

Die Übermittlung von Nutz- und Signalisierungsdaten zwischen dem Proxy-Server PROXY und der Mobilstation MS erfolgt über mehrere zwischengeschaltete Einrichtungen. Der Proxy-Server PROXY ist hierzu über Leitungen mit einer Einrichtung des Kernnetzes des Funkkommunikationssystems GPRS verbunden, von wo aus die Informationen über Leitungen an Basisstationen übermittelt werden, von wo aus eine Funkübertragung der Informationen zu der Mobilstation MS stattfindet.

Nutzdatenpakete werden von dem Internet INTERNET über den Proxy-Server PROXY an die Mobilstation MS unter Verwendung des Transmission Control Protocol (TCP) übertragen. Das Transmission Control Protocol der Transportschicht wird in Verbindung mit dem Internet Protocol (IP) der Vermittungsschicht eingesetzt. TCP ist ein verbindungsorientiertes Endto-End-Protokoll mit gesicherter Datenübertragung, Verbindungssteuerung, Flusskontrolle, Zeitüberwachung und Multiplex in der Transportschicht der Protokollarchitektur TCP/IP. TCP ist somit für die korrekte Auslieferung von Daten verantwortlich.

Sollen Nutzdaten unter Verwendung des TCP an einen Teilnehmer übertragen werden, so wird der sogenannte Slow-Start-Algorithmus verwendet. Der Sinn dieses Algorithmus liegt darin, das Risiko einer Überbelastung (Congestion) eines Netzes zu verringern. Hierzu startet der Sender die Übertragung von Nutzinformationen mit der Übertragung von wenigen Datenpaketen, woraufhin er nach dem Empfang einer positiven Bestätigung von dem Empfänger der Datenpakete weitere Datenpakete sendet. Nach jeder positiven Bestätigung über den Empfang von Datenpaketen von dem Empfänger kann eine größere Anzahl von Datenpaketen von dem Sender an den Empfänger gesendet werden. Hierdurch kann die übertragene Datenrate mit der Zeit gesteigert werden, bis der aktuell maximal mögliche Datendurchsatz erreicht ist.

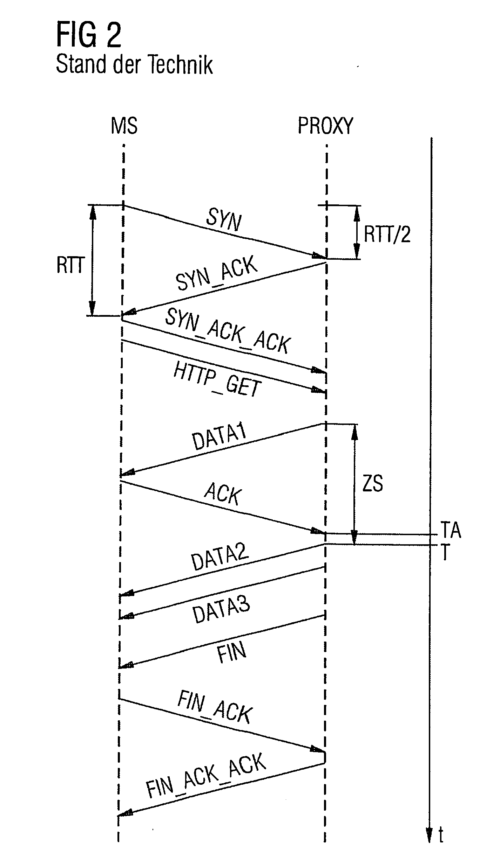

Figur 2 stellt ein Ablaufdiagramm zur Verwendung eines Slow-Start-Algorithmus dar. Der Ablauf der Zeit t ist in Figur 2 nach unten aufgetragen. Im betrachteten Beispiel werden Datenpakete zwischen der Mobilstation MS und dem Proxy-Server PROXY übertragen. Da es sich bei TCP um ein verbindungsorientiertes Protokoll handelt, wird die Verbindung zwischen der Mobilstation MS und dem Proxy-Server PROXY zuerst über ein 3-Way-Handshake aufgebaut. Über dieses 3-Way-Handshake werden Steuerinformationen ausgetauscht, welche die logische End-to-End-Verbindung etablieren. Hierzu sendet zuerst die Mobilstation MS ein Signalisierungspaket SYN. Mittels des Signalisierungspaketes SYN teilt die Mobilstation MS dem Proxy-Server PROXY unter anderem mit, dass der Aufbau einer Verbindung von der Mobilstation MS gewünscht wird. Als Bestätigung sendet der Proxy-Server PROXY daraufhin ein Signalisierungspaket SYN_ACK. Erneut bestätigt die Mobilstation MS dieses Signal mit einem Signalisierungspaket SYN_ACK_ACK. Weiterhin sendet die Mobilstation MS dem Proxy-Server PROXY ein Signalisierungspaket HTTP_GET, in welchem die konkrete Anforderung nach Datenpaketen aus dem Internet enthalten ist.

Als Umlaufzeit RTT (Round Trip Time)wird beispielsweise die Zeit zwischen der Versendung des Signals SYN durch die Mobilstation MS und dem Empfang des Signals SYN_ACK bezeichnet. Die Zeitdifferenz RTT/2 zwischen der Versendung eines Datenpaketes und dem Empfang desselben Datenpaketes entspricht in etwa, bis auf Verzögerungen, welche durch die Bearbeitung und Erzeugung bzw. Verarbeitung von Datenpaketen zustande kommen können, der Hälfte der Umlaufzeit RTT. Während der Routine zum Verbindungsaufbau wird die Umlaufzeit RTT und/oder die Zeitdifferenz zwischen der Versendung und dem Empfang eines Signals zwischen Sender und Empfänger durch den Proxy-Server PROXY ermittelt.

Nachdem die Verbindung zwischen der Mobilstation MS und dem Proxy-Server PROXY hergestellt wurde, liegt aufgrund der Anforderung der Mobilstation MS nach Daten aus dem Internet nach dem Empfang der von der Mobilstation MS angeforderten Daten im Proxy-Server PROXY innerhalb des Proxy-Servers PROXY eine Datenmenge für die Mobilstation MS vor. Diese Daten werden von dem Proxy-Server PROXY gemäß dem TCP-Protokoll verarbeitet und an die Mobilstation MS versendet. Im betrachteten Beispiel wird angenommen, dass drei Nutzdatenpakete mit Daten aus dem Internet an die Mobilstation MS zu senden sind. Zuerst sendet der Proxy-Server PROXY ein erstes Nutzdatenpaket DATA1 aus der Menge der von der Mobilstation MS angeforderten Daten an die Mobilstation MS. Nach dem Empfang des Nutzdatenpaketes DATA1 durch die Mobilstation MS sendet diese eine Empfangsbestätigung ACK an den Proxy-Server PROXY. Anschließend an den Empfang der Empfangsbestätigung ACK im Proxy-Server PROXY zum Zeitpunkt TA sendet dieser daraufhin zwei weitere Nutzdatenpakete DATA2 und DATA3 zum Zeitpunkt T an die Mobilstation MS. Nach der Versendung des ersten Nutzdatenpaketes DATA1 bis zur Versendung des zweiten Nutzdatenpaketes DATA2 vergeht die Zeitspanne ZS, während welcher der Proxy-Server PROXY wartet, d.h. keine Nutzdatenpakete an die Mobilstation MS sendet.

Gemäß dem Slow-Start-Algorithmus ist der Proxy-Server PROXY erst dann befugt, weitere Nutzdatenpakete an die Mobilstation MS zu senden, wenn eine positive Empfangsbestätigung ACK des ersten Nutzdatenpaketes empfangen wurde. Dies bedeutet, dass der Zeitpunkt TA gemäß dem Ablaufdiagramm der Figur 2 vor dem Zeitpunkt T liegt.

Das Beenden der Verbindung zwischen der Mobilstation MS und dem Proxy-Server PROXY erfolgt nach abgeschlossener Nutzdatenpaketübertragung unter Verwendung von Signalisierungsdatenpaketen FIN, FIN_ACK und FIN_ACK_ACK in analoger Weise zu dem Handshake des Verbindungsaufbaus. Die Signalisierung FIN kann hierbei auch in Verbindung mit dem Nutzdatenpaket DATA3 gesendet werden.

Während die Signalisierungen zur Bestätigung in Form der Datenpakete SYN_ACK_ACK, FIN_ACK_ACK und ACK im Rahmen des beschriebenen Beispiels mit unterschiedlichen Namen versehen wurden, ist ihr Aufbau und ihre Wirkung in der Regel bei Verwendung von TCP gleich.

Die Größe von Objekten, welche aus dem Internet heruntergeladen werden, beträgt in der Regel ungefähr 10 KB. Dies entspricht in etwa 7 bis 8 Nutzdatenpaketen innerhalb des GPRS-Funkkommunikationssystems. Aufgrund dieser geringen Anzahl an Nutzdatenpaketen wird ein Großteil dieser Nutzdatenpakete unter Verwendung der Slow-Start-Algorithmus übertragen. In dieser Phase, während welcher der Slow-Start-Algorithmus angewandt wird, ist die erreichbare Übertragungsrate deutlich geringer als die aufgrund der zur Verfügung stehenden Bandweite innerhalb des GPRS-Funkkommunikationssystems maximal erreichbare Übertragungsrate.

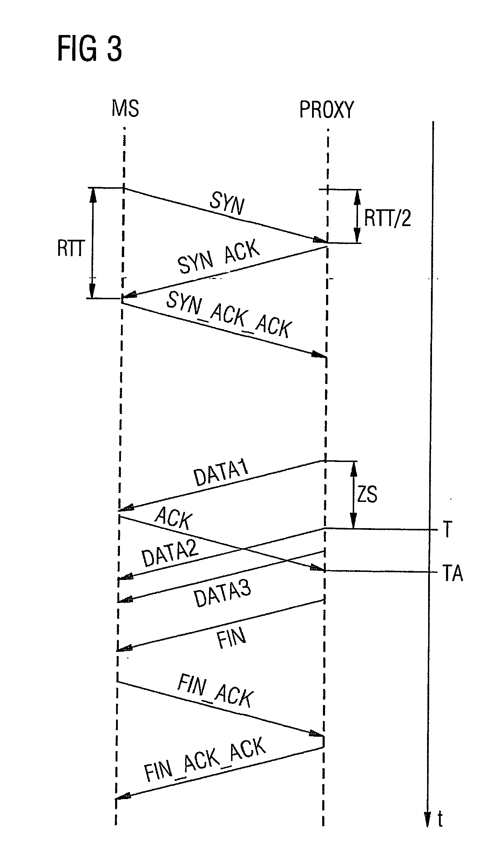

Figur 3 zeigt ein Ablaufdiagramm eines erfindungsgemäßen Verfahrens. Erneut wird der Fall betrachtet, dass drei Nutzdatenpakete aus dem Internet über den Proxy-Server PROXY an die Mobilstation MS übertragen werden sollen. Der Aufbau der Verbindung zwischen dem Proxy-Server PROXY und der Mobilstation MS erfolgt in analoger Weise zu dem Ablaufdiagramm der Figur 2.

Die Nutzdatenübertragung zwischen dem Proxy-Server PROXY und der Mobilstation MS wird dadurch gestartet, dass der Proxy-Server PROXY ein erstes Nutzdatenpaket DATA1 an die Mobilstation MS sendet. Nach Empfang dieses ersten Nutzdatenpaketes DATA1 sendet die Mobilstation MS eine positive Empfangsbestätigung ACK, welche der Proxy-Server PROXY zum Zeitpunkt TA empfängt. Während der Zeitspanne ZS sendet der Proxy-Server PROXY keine Nutzdatenpakete an die Mobilstation MS. Der Proxy-Server PROXY wartet mit der Versendung der weiteren Nutzdatenpakete DATA2 und DATA3 nicht bis zum Empfang der Empfangsbestätigung ACK zum Zeitpunkt TA. Nach Ablauf der Zeitspanne ZS, zum Zeitpunkt T, welcher vor dem Zeitpunkt TA des Empfangs der Empfangsbestätigung ACK im Proxy-Server PROXY liegt, startet der Proxy-Server PROXY mit der Versendung der restlichen Nutzdatenpakete DATA2 und DATA3.

Zwischen dem Empfang eines Datenpaketes und der Versendung eines Datenpaketes als Antwort auf das empfangene Datenpaket können jeweils unterschiedliche Verzögerungszeiten entstehen, welche von den Kapazitäten des Senders bzw. des Empfängers abhängen. Zum Beispiel entstehen Verzögerungen durch die Verarbeitung der empfangenen Signale und durch die Erzeugung der zu sendenden Signale. Ein Beispiel für eine solche Verzögerung ist zwischen der Versendung des Nutzdatenpaketes DATA2 und des Nutzdatenpaketes DATA3 zu sehen. Die Zeitspanne ZS ist in dem erfindungsgemäßen Verfahren jedoch in jedem Fall größer als die durch die Bearbeitungskapazitäten des Senders hervorgerufenen Verzögerungszeiten.

Das Beenden der Verbindung zwischen dem Proxy-Server PROXY und der Mobilstation MS erfolgt in analoger Weise zum Ablaufdiagramm der Figur 2.

Die Zeitspanne ZS, welche zwischen der Versendung des ersten Nutzdatenpaketes DATA1 und der Versendung der weiteren Nutzdatenpakete DATA2 und DATA3 verstreicht, wird von dem Proxy-Server PROXY bestimmt. Dies entspricht in direkter Weise einer Bestimmung des Sendezeitpunktes T der Nutzdatenpakete DATA2 und DATA3. Diese Zeitspanne ZS kann insbesondere von dem zuvor ermittelten Ergebnis für die Umlaufzeit RTT abhängen. Zum Beispiel kann ZS so bestimmt werden, dass sie in etwa der Hälfte RTT/2 der Umlaufzeit RTT entspricht.

Ein Vorteil des erfindungsgemäßen Verfahrens liegt darin, dass zu übertragenden Nutzdatenpakete am Anfang der Nutzdatenübertragung in einer kürzeren Zeit übertragen werden können, als dies bei Verwendung des herkömmlichen Slow-Start-Algorithmus möglich wäre. Dies wird dadurch realisiert, dass die Zeit, während welcher sowohl die Mobilstation MS als auch der Proxy-Server PROXY empfangsbereit abwarten, d.h. die Zeit nach Versendung der Empfangsbestätigung durch den Empfänger bis zur Versendung der weiteren Datenpakete durch den Sender zum Zeitpunkt T, verkürzt wurde.

Im Gegensatz zu der Übertragung von Nutzdatenpaketen über Festleitungen ist der Anteil der Nutzdatenpakete, welche bei einer Funkübertragung mittels GPRS verloren gehen, gering. Bei Verlust eines Nutzdatenpaketes kann der Proxy-Server PROXY keine Empfangsbestätigung ACK empfangen, da der Empfänger eine solche Bestätigung nicht versendet. In diesem Fall wird das betreffende während der Übertragung verloren gegangene Nutzdatenpaket erneut versendet. Aufgrund der geringen Paketverlustrate innerhalb eines GPRS-Funkkommunikationssystems tritt ein derartiges Ausbleiben einer Empfangsbestätigung ACK selten auf. Daher ist das erfindungsgemäße Verfahren, bei welchem der Sender mit der Übertragung von weiteren Nutzdatenpaketen nicht bis zum Empfang der Empfangsbestätigung ACK wartet, besonders vorteilhaft auf Mobilfunkkommunikationssysteme anwendbar.

Weiterhin ist die Anwendung des erfindungsgemäßen Verfahrens auf ein Mobilfunkkommunikationssystem besonders vorteilhaft, da die Umlaufzeit in Mobilfunkkommunikationssystemen in der Regel sehr hoch ist. So sind Umlaufzeiten von 1,5 Sekunden zwischen der Gi-Schnittstelle und einer Mobilstation der Regelfall. Dies hat zur Folge, dass bei Verwendung eines unmodifizierten Slow-Start-Algorithmus eine lange Zeit zwischen dem Empfang des ersten Datenpaketes und der folgenden Datenpakete in der Mobilstation verstreicht. Dies resultiert darin, dass in der Anfangsphase einer Nutzdatenübertragung nur wenige Nutzdatenpakete pro Zeit übertragen werden können. Durch die Reduzierung der Zeitspanne zwischen der Übertragung eines ersten Nutzdatenpaketes und der folgenden Nutzdatenpakete im Rahmen eines modifizierten Slow-Start-Algorithmus ermöglicht das erfindungsgemäße Verfahren eine deutliche Erhöhung des Datendurchsatzes zu Beginn einer Nutzdatenübertragung.

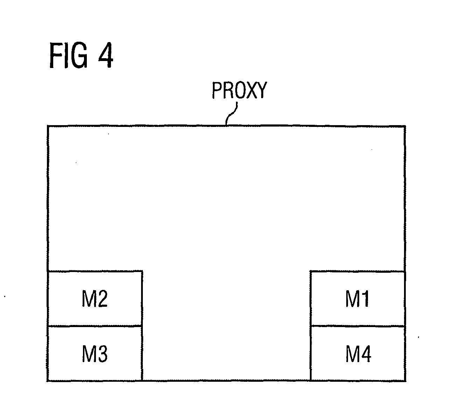

Figur 4 zeigt einen erfindungsgemäßen Sender in Form eines Proxy-Servers PROXY. Dieser weist Mittel M1 auf, welche es ihm ermöglichen, Datenpakete unter Verwendung des TCP-Protokolls zu empfangen, zu verarbeiten und zu versenden. Weiterhin liegen Mittel M2 und M3 vor, aufgrund welcher der Proxy-Server PROXY Nutzdatenpakete an einen Empfänger gemäß dem erfindungsgemäßen Verfahren senden kann. Die Mittel M4 ermöglichen es dem Sender, einen Zeitpunkt zu bestimmen, zu welchem er weitere Nutzdatenpakete sendet, nachdem er eine Zeitspanne nach dem Senden eines ersten oder einer Anzahl von ersten Nutzdatenpaketen gewartet hat, ohne Nutzdatenpakete an den Empfänger zu versenden.

Die Modifikation des Slow-Start-Algorithmus zur Übertragung von Daten von einem Proxy-Server an eine Teilnehmerstation ist hierbei unabhängig von der Verwendung des Slow-Start-Algorithmus zur Datenübertragung zwischen dem Internet und dem Proxy-Server. So kann der Protokollstapel des Proxy-Servers auf Seiten der Teilnehmerstation modifiziert werden, um das erfindungsgemäße Verfahren zu implementieren, ohne eine Änderung des Protokollstapels seitens des Internets nötig zu machen.

Das erfindungsgemäße Verfahren erfordert keine Modifikation der Teilnehmerstation, welche die Daten von dem Sender empfängt. Vielmehr kann sich die Teilnehmerstation so verhalten, wie es das herkömmliche Slow-Start-Verfahren erfordert.

## Patentansprüche

1. Verfahren zur Übertragung einer Reihe von Nutzdatenpaketen (DATA1, DATA2, DATA3) von einem Sender (PROXY) gegebenenfalls über eine oder mehrere die Nutzdatenpakete (DATA1, DATA2, DATA3) weiterleitende Einrichtungen zu einem Empfänger (MS) unter Verwendung eines TCP-Protokolls,
- wobei der Sender (PROXY) zu Beginn der Nutzdatenübertragung eine erste Anzahl an Nutzdatenpaketen (DATA1) der Reihe von Nutzdatenpaketen (DATA1, DATA2, DATA3) an den Empfänger (MS) sendet,
- wobei die Nutzdatenpakete bei Versendung einer Mehrzahl von Nutzdatenpaketen als erste Anzahl an Nutzdatenpaketen in direkter Abfolge nacheinander gesendet werden,
**dadurch gekennzeichnet,**
- **dass** der Sender (PROXY) nach der Versendung der ersten Anzahl an Nutzdatenpaketen (DATA1) während einer Zeitspanne (ZS) keine Nutzdatenpakete an den Empfänger (MS) sendet, wobei diese Zeitspanne (ZS) diejenige Zeitspanne übersteigt, welche gegebenenfalls zwischen der Versendung der einzelnen Nutzdatenpakete der ersten Anzahl an Nutzdatenpaketen (DATA1) verstreicht,
- wobei der Sender (PROXY) zu einem späteren Zeitpunkt (T) eine zweite Anzahl an Nutzdatenpaketen (DATA2, DATA3) der Reihe von Nutzdatenpaketen (DATA1, DATA2, DATA3) an den Empfänger (MS) sendet, und
- wobei der Sender (PROXY) von dem Empfänger (MS) eine auf den Empfang der ersten Anzahl an Nutzdatenpaketen (DATA1) hin gesendete Empfangsbestätigung (ACK) empfängt,
- wobei der spätere Zeitpunkt (T) so bestimmt wird, dass er vor dem Zeitpunkt (TA) des Empfangs der Empfangsbestätigung (ACK) durch den Sender (PROXY) der Nutzdatenpakete (DATA1, DATA2, DATA3) liegt.

2. Verfahren nach Anspruch 1,
**dadurch gekennzeichnet,**
**dass** der spätere Zeitpunkt (T) so bestimmt wird, dass der Empfänger (MS) die zweite Anzahl an Nutzdatenpaketen (DATA2, DATA3) nach der Versendung der Empfangsbestätigung (ACK) empfängt.

3. Verfahren nach Anspruch 1 oder 2,
**dadurch gekennzeichnet,**
**dass** die Zeitspanne (ZS) von der Zeitdifferenz (RTT/2) zwischen der Versendung eines Datenpaketes durch den Sender (PROXY) und dem Empfang dieses Datenpaketes durch den Empfänger (MS) abhängt.

4. Verfahren nach einem der Ansprüche 1 bis 3,
**dadurch gekennzeichnet,**
**dass** die Nutzdatenpakete (DATA1, DATA2, DATA3) von dem Sender (PROXY) zu dem Empfänger (MS) zumindest teilweise über Funk übertragen werden.

5. Verfahren nach einem der Ansprüche 1 bis 4,
**dadurch gekennzeichnet,**
**dass** es sich bei den Nutzdatenpaketen (DATA1, DATA2, DATA3) um Daten aus dem Internet (INTERNET) handelt.

6. Verfahren nach einem der Ansprüche 1 bis 5,
**dadurch gekennzeichnet,**
- **dass** der Empfänger (MS) Bestandteil eines Mobilfunkkommunikationssystems (GPRS) ist und
- **dass** der Sender (PROXY) eine sowohl mit dem Mobilfunkkommunikationssystem (GPRS) als auch mit einem anderen, ein TCP-Protokoll verwendenden Netz (INTERNET) verbundene Einrichtung ist.

7. Verfahren nach einem der Ansprüche 1 bis 6,
**dadurch gekennzeichnet,**
**dass** die zweite Anzahl an Nutzdatenpaketen (DATA2, DATA3) die erste Anzahl an Nutzdatenpakete (DATA1) übersteigt.

8. Vorrichtung (PROXY) zur Übertragung einer Reihe von Nutzdatenpaketen (DATA1, DATA2, DATA3) an einen Empfänger (MS) gegebenenfalls über eine oder mehrere die Nutzdatenpakete (DATA1, DATA2, DATA3) weiterleitende Einrichtungen,
- mit Mitteln (M1) zur Verwendung eines TCP-Protokolls zur Versendung von Nutzdatenpaketen (DATA1, DATA2, DATA3),
- mit Mitteln (M2) zum Versenden einer ersten Anzahl an Nutzdatenpaketen (DATA1) der Reihe von Nutzdatenpaketen (DATA1, DATA2, DATA3) an den Empfänger (MS), bei Versendung einer Mehrzahl von Nutzdatenpaketen als erste Anzahl an Nutzdatenpaketen in direkter Abfolge nacheinander,
**gekennzeichnet durch**
- Mittel (M3) zum Versenden einer zweiten Anzahl an Nutzdatenpaketen (DATA2, DATA3) der Reihe von Nutzdatenpaketen (DATA1, DATA2, DATA3) an den Empfänger (MS) zu einem späteren Zeitpunkt (T) nach einer Zeitspanne (ZS) nach Versendung der ersten Anzahl an Nutzdatenpaketen (DATA1), wobei diese Zeitspanne (ZS) diejenige Zeitspanne übersteigt, welche gegebenenfalls zwischen der Versendung der einzelnen Nutzdatenpakete der ersten Anzahl an Nutzdatenpaketen verstreicht,
- und Mittel (M4) zum Bestimmen des späteren Zeitpunktes (T), so dass der spätere Zeitpunkt (T) vor dem Zeitpunkt (TA) des Empfangs einer von dem Empfänger (MS) auf den Empfang der ersten Anzahl an Nutzdatenpaketen (DATA1) hin gesendeten Empfangsbestätigung (ACK) in der Vorrichtung (PROXY) liegt.

9. Vorrichtung (PROXY) nach Anspruch 8,
**dadurch gekennzeichnet,**
**dass** die Vorrichtung (PROXY) Mittel (M4) zum Bestimmen des späteren Zeitpunktes (T) aufweist, so dass die Zeitspanne (ZS) von der Zeitdifferenz (RTT/2) zwischen der Versendung eines Datenpaketes durch die Vorrichtung (PROXY) und dem Empfang dieses Datenpaketes durch den Empfänger (MS) abhängt.

10. Vorrichtung (PROXY) nach Anspruch 8 oder 9,
**dadurch gekennzeichnet,**
**dass** die Vorrichtung (PROXY) derart mit einem Mobilfunkkommunikationssystem (GPRS) verbunden ist, dass die Nutzdatenpakete (DATA1, DATA2, DATA3) über das Mobilfunkkommunikationssystem (GPRS) an den Empfänger (MS) übertragbar sind.

## Claims

1. Method for transmitting a series of payload data packets (DATA1, DATA2, DATA3) from a transmitter (PROXY), if necessary via one or more devices which forward the payload data packets (DATA1, DATA2, DATA3), to a receiver (MS) using a TCP protocol,
- in which, at the start of the payload data transmission, the transmitter (PROXY) transmits to the receiver (MS) a first number of payload data packets (DATA1) from the series of payload data packets (DATA1, DATA2, DATA3),
- in which, if a plurality of payload data packets are transmitted as the first number of payload data packets, the payload data packets are transmitted one directly after another,
**characterised in that**
- after dispatching the first number of payload data packets (DATA1), the transmitter (PROXY) transmits no payload data packets to the receiver (MS) for an interval of time (ZS), where this interval of time (ZS) exceeds that interval of time which may if necessary elapse between the dispatch of individual payload data packets in the first number of payload data packets (DATA1),
- at a later point in time (T) the transmitter (PROXY) transmits to the receiver (MS) a second number of payload data packets (DATA2, DATA3) from the series of payload data packets (DATA1, DATA2, DATA3), and
- the transmitter (PROXY) receives a confirmation of receipt (ACK) transmitted back from the receiver (MS) on receipt of the first number of payload data packets (DATA1),
- the later point in time (T) is so determined that it lies before the point in time (TA) when the confirmation of receipt (ACK) is received by the transmitter (PROXY) of the payload data packets (DATA1, DATA2, DATA3).

2. Method in accordance with claim 1,
**characterised in that**
the later point in time (T) is so determined that the receiver (MS) receives the second number of payload data packets (DATA2, DATA3) after the dispatch of the confirmation of receipt (ACK).

3. Method in accordance with claim 1 or 2,
**characterised in that**
the time interval (ZS) depends on the time difference (RTT/2) between the dispatch of a data packet by the transmitter (PROXY) and the receipt of this data packet by the receiver (MS).

4. Method in accordance with one of the claims 1 to 3,
**characterised in that**
the payload data packets (DATA1, DATA2, DATA3) are transmitted from the transmitter (PROXY) to the receiver (MS) at least partly by radio.

5. Method in accordance with one of the claims 1 to 4,
**characterised in that**
the payload data packets (DATA1, DATA2, DATA3) are data from the Internet (INTERNET).

6. Method in accordance with one of the claims 1 to 5,
**characterised in that**
- the receiver (MS) is a component of a mobile radiocommunication system (GPRS) and
- the transmitter (PROXY) is a device which is connected both with the mobile radiocommunication system (GPRS) and also with another network (INTERNET) which uses a TCP protocol.

7. Method in accordance with one of the claims 1 to 6
**characterised in that**
the second number of payload data packets (DATA2, DATA3) is greater than the first number of payload data packets (DATA1).

8. Device (PROXY) for the transmission of a series of payload data packets (DATA1, DATA2, DATA3) to a receiver (MS), if necessary via one or more devices which forward the payload data packets (DATA1, DATA2, DATA3).
- with facilities (M1) for using a TCP protocol for dispatching payload data packets (DATA1, DATA2, DATA3),
- with facilities (M2) for dispatching to the receiver (MS) a first number of payload data packets (DATA1) from the series of payload data packets (DATA1, DATA2, DATA3), if a plurality of payload data packets is dispatched as the first number of payload data packets one directly after another,
**characterized in that**
- facilities (M3) for dispatching to the receiver (MS) a second number of data packets (DATA2, DATA3) from the series of payload data packets (DATA1, DATA2, DATA3) at a later point in time (T) after an interval of time (ZS) from when the first number of payload data packets (DATA1) is dispatched, where this interval of time (ZS) exceeds that interval of time which may if necessary elapse between the dispatch of individual payload data packets in the first number of payload data packets,
- and facilities (M4) for determining the later point in time (T) so that this later point in time (T) lies before the point in time (TA) when a confirmation of receipt (ACK), transmitted back from the receiver (MS) upon receipt of the first number of payload data packets (DATA1), is received in the device (PROXY) .

9. Device (PROXY) in accordance with claim 8
**characterised in that**
the device (PROXY) has facilities (M4) for determining the later point in time (T) so that the time interval (ZS) depends on the time difference (RTT/2) between the dispatch of a data packet by the device (PROXY) and the receipt of this data packet by the receiver (MS).

10. Device (PROXY) in accordance with claim 8 or 9
**characterised in that**
the device (PROXY) is connected to a mobile radiocommunication system (GPRS) in such a way that the payload data packets (DATA1, DATA2, DATA3) can be transmitted to the receiver (MS) via the mobile radiocommunication system (GPRS).

## Revendications

1. Procédé pour transmettre une série de paquets de données utiles (DATA1, DATA2, DATA3) depuis un émetteur (PROXY), le cas échéant par l'intermédiaire d'un ou de plusieurs dispositifs qui retransmettent les paquets de données utiles (DATA1, DATA2, DATA3), vers un destinataire (MS) en utilisant un protocole TCP,
- dans lequel l'émetteur (PROXY) envoie un premier nombre de paquets de données utiles (DATA1) de la série de paquets de données utiles (DATA1, DATA2, DATA3) au destinataire (MS) au début de la transmission des données utiles,
- dans lequel les paquets de données utiles sont envoyés l'un après l'autre en séquence directe en cas d'envoi d'une pluralité de paquets de données utiles comme premier nombre de paquets de données utiles,
**caractérisé en ce que**:
- après l'envoi du premier nombre de paquets de données utiles (DATA1), l'émetteur (PROXY) n'envoie aucun paquet de données utiles au destinataire (MS) pendant un laps de temps (ZS), sachant que ce laps de temps-ci (ZS) dépasse ce laps de temps qui s'écoule le cas échéant entre l'envoi des paquets individuels de données utiles du premier nombre de paquets de données utiles (DATA1) ;
- dans lequel l'émetteur (PROXY) envoie à un moment ultérieur (T) un second nombre de paquets de données utiles (DATA2, DATA3) de la série de paquets de données utiles (DATA1, DATA2, DATA3) au destinataire (MS), et
- dans lequel l'émetteur (PROXY) reçoit de la part du destinataire (MS) une confirmation de réception (ACK) envoyée suite à la réception du premier nombre de paquets de données utiles (DATA1),
- dans lequel le moment ultérieur (T) est déterminé de telle sorte qu'il se trouve avant le moment (TA) de la réception de la confirmation de réception (ACK) par l'émetteur (PROXY) des paquets de données utiles (DATA1, DATA2, DATA3).

2. Procédé selon la revendication 1,
**caractérisé en ce que**
le moment ultérieur (T) est déterminé de telle sorte que le destinataire (MS) reçoit le second nombre de paquets de données utiles (DATA2, DATA3) après l'envoi de la confirmation de réception (ACK).

3. Procédé selon la revendication 1 ou 2,
**caractérisé en ce que**
le laps de temps (ZS) dépend de la différence de temps (RTT/2) entre l'envoi d'un paquet de données par l'intermédiaire de l'émetteur (PROXY) et la réception de ce paquet de données par le destinataire (MS).

4. Procédé selon l'une des revendications 1 à 3,
**caractérisé en ce que**
les paquets de données utiles (DATA1, DATA2, DATA3) sont transmis par l'émetteur (PROXY) au destinataire (MS), au moins en partie par radio.

5. Procédé selon l'une des revendications 1 à 4,
**caractérisé en ce que**
les paquets de données utiles (DATA1, DATA2, DATA3) sont des données en provenance de l'Internet (INTERNET).

6. Procédé selon l'une des revendications 1 à 5,
**caractérisé en ce que**
- le destinataire (MS) fait partie intégrante d'un système de radiocommunication mobile (GPRS), et
- l'émetteur (PROXY) est un dispositif relié aussi bien au système de radiocommunication mobile (GPRS) qu'à un autre réseau (INTERNET) qui utilise un protocole TCP.

7. Procédé selon l'une des revendications 1 à 6,
**caractérisé en ce que**
le second nombre de paquets de données utiles (DATA2, DATA3) dépasse le premier nombre de paquets de données utiles (DATA1) .

8. Dispositif (PROXY) pour transmettre une série de paquets de données utiles (DATA1, DATA2, DATA3) à un destinataire (MS), le cas échéant par l'intermédiaire d'un ou de plusieurs dispositifs qui retransmettent les paquets de données utiles (DATA1, DATA2, DATA3),
- comprenant des moyens (M1) pour l'utilisation d'un protocole TCP afin d'envoyer des paquets de données utiles (DATA1, DATA2, DATA3),
- comprenant des moyens (M2) pour l'envoi d'un premier nombre de paquets de données utiles (DATA1) de la série de paquets de données utiles (DATA1, DATA2, DATA3) au destinataire (MS), l'un après l'autre en séquence directe en cas d'envoi d'une pluralité de paquets de données utiles comme premier nombre de paquets de données utiles,
**caractérisé par** :
- des moyens (M3) pour l'envoi d'un second nombre de paquets de données utiles (DATA2, DATA3) de la série de paquets de données utiles (DATA1, DATA2, DATA3) au destinataire (MS) à un moment ultérieur (T) après un laps de temps (ZS), après l'envoi du premier nombre de paquets de données utiles (DATA1), sachant que ce laps de temps (ZS) dépasse ce laps de temps-ci qui s'écoule le cas échéant entre l'envoi des paquets individuels de données utiles du premier nombre de paquets de données utiles,
- et des moyens (M4) pour déterminer le moment ultérieur (T) de telle sorte que, dans le dispositif (PROXY), le moment ultérieur (T) se trouve avant le moment (TA) de la réception d'une confirmation de réception (ACK) envoyée par le destinataire (MS), suite à la réception du premier nombre de paquets de données utiles (DATA1) .

9. Dispositif (PROXY) selon la revendication 8,
**caractérisé en ce que**
le dispositif (PROXY) présente des moyens (M4) pour déterminer le moment ultérieur (T) de telle sorte que le laps de temps (ZS) dépend de la différence de temps (RTT/2) entre l'envoi d'un paquet de données par l'intermédiaire du dispositif (PROXY) et la réception de ce paquet de données par le destinataire (MS).

10. Dispositif (PROXY) selon la revendication 8 ou 9,
**caractérisé en ce que**
le dispositif (PROXY) est relié à un système de radiocommunication mobile (GPRS) de telle sorte que les paquets de données utiles (DATA1, DATA2, DATA3) peuvent être transmis au destinataire (MS) par l'intermédiaire du système de radiocommunication mobile (GPRS).
